# EUROPÄISCHE PATENTSCHRIFT

(11) **EP 3 126 463 B1**
(45) Veröffentlichungstag und Bekanntmachung des Hinweises auf die Patenterteilung: **16.05.2018**
(21) Anmeldenummer: 14812168.4
(22) Anmeldetag: 05.12.2014
(51) Int. Cl.: C09J 7/02

(54) **KLEBEBAND**
ADHESIVE TAPE
BANDE ADHÉSIVE

(30) Priorität: 02.04.2014 DE 102014206349
(43) Veröffentlichungstag der Anmeldung: 08.02.2017
(73) Patentinhaber: tesa SE, 22848 Norderstedt (DE)
(72) Erfinder: BERNT, Stephan, 22529 Hamburg (DE); KEREP, Patrick, 22767 Hamburg (DE); RODEWALD, Ilse, 48167 Münster (DE)
(86) Internationale Anmeldenummer: PCT/EP2014/076679
(87) Internationale Veröffentlichungsnummer: WO 2015/149889

(56) Entgegenhaltungen:
- WO-A1-02/10304
- WO-A1-03/006567
- DE-A1-102011 009 510

## Beschreibung

Die Erfindung betrifft die Verwendung eines Klebebandes zum Verbinden zweier Bahnen. Klebebänder werden unter anderem zur Herstellung einer Verbindung zwischen zwei flachen, zu Rollen gewickelten bahnförmigen Materialien bei einem statischen Rollenwechsel eingesetzt.

Flache, bahnförmige Materialien, insbesondere Papier, werden zu Rollen aufgewickelt, um beispielsweise einer papierverarbeitenden Maschine oder einer Druckbeziehungsweise Verpackungsmaschine zugeführt zu werden. Bei einem statischen Rollenwechsel werden die Rollen wie beispielsweise ein Papiertambour angehalten, das heißt, ihre Rotation gestoppt, das Ende des einen Tambours mit dem Anfang des anderen verklebt und der neue Tambour dann wieder in Rotation versetzt. Der statische, manuell von Produktionsmitarbeitern durchgeführte Rollenwechsel von einer leeren auf eine volle Rolle ist in Papierfabriken oder dergleichen ein gängiges Verfahren, um unter anderem endlose Papierbahnen zu erhalten. In der Papierindustrie wird dieses Verfahren zum Beispiel an Umwicklern, Rollenschneidern und Querschneidern eingesetzt. Ein statischer Rollenwechsel ist ein aufwändiger Vorgang, der üblicherweise von zwei Fachkräften ausgeführt werden muss.

Häufig bleibt die Verbindung zwischen alter und neuer Papierbahn, die als Spleißen (engl.: "to splice") bezeichnet wird, in der derart zusammengesetzten Papierbahn erhalten und wird an einen Endkunden ausgeliefert. Allgemein unabhängig von der Beschaffenheit der zu verbindenden Bahnen wird das Verbinden derselben als Spleißen bezeichnet. Zur Herstellung derartiger Verbindungen sind doppelseitige Klebebänder, sogenannte Fixe, oder einseitige Klebebänder bekannt. Als Träger für die Klebebänder werden üblicherweise Papierträger verwendet sowie wasserlösliche Selbstklebemassen, die auf den Träger ein- oder beidseitig beschichtet werden.

Bei der Verwendung eines doppelseitigen Klebebands zur Herstellung einer Verbindung wird das Klebeband im Wesentlichen in Längsrichtung einer vollen Rolle des bahnförmigen Materials auf die äußere Lage des bahnförmigen Materials aufgeklebt. Anschließend wird an der radial nach außen weisenden Seite des Klebebands das Trenn- oder Abdeckpapier von der anderen Selbstklebemasse abgezogen und das Ende der Bahn der leeren Rolle wie beispielsweise die Papierbahn des leeren Tambours auf die Selbstklebemasse aufgeklebt. Eventuell überstehende Papierreste können nachgeschnitten oder abgerissen werden.

Einseitige Klebebänder werden hälftig derart unter das Ende der obersten Lage der einen Rolle verklebt, dass im Wesentlichen noch die Hälfte der Selbstklebemasse, in der Breite des Klebebands gesehen, zur Verklebung mit dem anderen Bahnende zur Verfügung steht. In vorteilhafter Weise sind die einseitigen Klebebänder mit einem mittig geschlitzten Trenn- oder Abdeckpapier versehen, so dass die Verklebungen nacheinander ausgeführt werden können, wobei jeweils nur ein Abschnitt des Trennpapiers abgezogen wird. Die Verbindung mit einseitigen Klebebändern wird besonders bei Verklebungen eingesetzt, die länger in einer Papierrolle verbleiben. Aufgrund ihrer geringen Dicke verursachen sie bei der Weiterverarbeitung der Papierbahn keine Druckstellen und die elastische Selbstklebemasse wird durch die Weiterverarbeitung nicht seitlich herausgequetscht.

Die eingesetzten Klebebänder zeichnen sich durch scherfeste, meist wasserlösliche Klebemassen aus, da sonst die Gefahr des Versagens bei den hohen Zugspannungen besteht oder die Klebebänder beim Einwickeln zu Rollen und der längeren Lagerung ausquetschen und somit mit den nächsten Papierlagen verkleben, was dann bei der Weiterverarbeitung zu Problemen führen kann, andererseits aber aufgrund ihrer wasserlöslichen Selbstklebemassen und Papierträger beim Wiedereinsatz der Papierabfälle in der Papiermaschine nicht stören.

Weiterhin sind einseitige Klebebänder bekannt, die auf ihrer Rückseite, die der Selbstklebemasse, die auf den Träger beschichtet ist, gegenüber liegt, mit einem spaltbaren System versehen sind. Dabei wird das spaltbare System, das im Wesentlichen ebenfalls ein doppelseitiges Klebeband umfasst, auf die zweitäußere Lage des bahnförmigen Materials auf der Rolle aufgeklebt, um derart die äußere Lage, die hälftig auf die freiliegende Selbstklebemasse des Klebebands aufgeklebt ist, auf der Rolle zu fixieren. Sobald das Ende der alten Bahn auf der anderen Hälfte der Selbstklebemasse des Klebebands festgeklebt ist und das bahnförmige Material beispielsweise in eine papierverarbeitende Maschine eingezogen wird, wird durch die auftretenden Kräfte, die im wesentlichen senkrecht zur Hauptebene des Klebebandes wirken, das spaltbare System, vorzugsweise der Träger dieses doppelseitigen Klebebands, aufgespalten, die äußere Lage von der Rolle abgewickelt und der Maschine zugeführt wobei die Selbstklebemasse auf der zweitäußeren Lage durch das spaltbare System in nicht klebender Weise abgedeckt ist.

Des Weiteren werden Klebebänder zum Verbinden von Bahnen wie einer ersten Folienbahn und einer zweiten Folienbahn eingesetzt, damit man eine entsprechend längere Gesamtlänge ("Lauflänge") erhält. Die Folienbahn liegt dann vorzugsweise aufgerollt auf einer Rolle ohne Unterbrechungen in der gewünschten Lauflänge vor.

Je länger die so erzielte Folienbahn ist, in desto höherem Maße kann bei ihrem Einsatz eine hohe Produktivität erzielt werden. Auch werden Rüst- oder Standzeiten, die etwa mit einem Rollenwechsel einhergehen, verringert.
Ein bekanntes Verfahren zum Verbinden von Folienbahnen ist das "Spleißen", bei dem handelsübliche selbstklebende Klebebänder manuell angebracht werden, um zwei Folienbahnen zusammenzukleben.
Das Spleißen mit Klebeband ist kostengünstig, kann mit einer relativ hohen Passergenauigkeit der Folienbahnen zueinander folgen, und der Spleiß (die Verbindungsstelle oder Verbindungsnaht) verfügt über hohe Festigkeiten, insbesondere Zugfestigkeit in Laufrichtung der Folienbahn. Die Zugfestigkeit in Laufrichtung der Folienbahn ist entscheidend, da während der Verarbeitung von Folienbahnen zum Beispiel in Druckmaschinen, Kaschiermaschinen, Laminiermaschinen, Heissprägemaschinen die auftretenden Kräfte, insbesondere zum schnellen Transport der Folienbahn, in Laufrichtung auftreten.

Gerade solche Folienspleiße sind bei der Herstellung von Klebebändern erforderlich. Die mit der Klebemasse zu beschichtenden Folienbahnen werden durch Spleißen zu einer endlosen Bahn, die zügig und ohne Unterbrechung beschichtet werden kann.

Beim Spleißen können der Enden der zu verbindenden Bahnen mehr oder minder direkt aneinanderstoßen, so dass das Verbinden der beiden zu verbindenden Bahnenden mittels eines Klebebands erfolgt, das derart aufgebracht wird, dass es beide Kanten überlappt. Dieser Spleiß ist als so genannter gestoßener Spleiß bekannt.
Des Weiteren können die Bahnenden auch überlappen, so dass das Klebeband parallel zur Endkante der oben liegenden Bahn so aufgebracht wird, dass das Klebeband sowohl auf dem Endstück der oben liegenden Bahn verklebt wird als auch gleichzeitig auf einem Abschnitt auf der darunter liegenden Bahn; die Überlappkante befindet sich dann unter dem Klebeband. Dieser Spleiß wird überlappender Spleiß genannt.

Des Weiteren werden ein- oder doppelseitige Klebebänder für die Rollenendverklebung in der papierherstellenden beziehungsweise -verarbeitenden Industrie eingesetzt.
Bei dem Einsatz der üblichen Festhalteetiketten in Kombination mit doppelseitigen Klebebändern besteht die Gefahr, dass diese Etiketten durch die Spannungen, die in der Papierrolle während der Lagerung entstehen können, aufreißen.
Die eingesetzten Klebebänder zeichnen sich in der Regel ebenfalls durch scherfeste, meist wasserlösliche Klebmassen aus, die einerseits die Gefahr des Versagens der Rollenendverklebung bei den hohen Zugspannungen ausräumen, die innerhalb einer Papierrolle bestehen, andererseits aber aufgrund ihrer wasserlöslichen Selbstklebemassen und Papierträger beim Wiedereinsatz der Papierabfälle in der Papiermaschine nicht stören.
Die Rollenendverklebung findet in der papierverarbeitenden Industrie mehrfach statt, so zum Beispiel nach der Papierherstellung an der Papiermaschine, nach dem Umrollen vor der Streichmaschine, nach der Beschichtung an der Streichmaschine, nach dem Kalandrieren, nach dem Rollenschneiden, vor dem Versand.

Dieses auch als "End Tabbing" bekannte Verschließen von Rollen ist neben der Papierindustrie auch in der Folienherstellung und auch in der Metallindustrie (zum Beispiel bei Coils aus gewalzten Blechen) bekannt.

Als nachteilig bei Klebebändern ist es anzusehen, dass aufgrund der hohen Zugkräfte im bahnförmigen Material in der gespleißten Bahn nach der Herstellung der Verbindung zu einem Auseinanderziehen der beiden Bahnenden an der Klebeverbindung in Längsrichtung des bahnförmigen Materials kommen kann. Dadurch liegt an der aufgezogenen Lücke zwischen den beiden Bahnenden die Selbstklebemasse frei und kann beispielsweise beim Aufwickeln auf eine neue Rolle mit der darüber liegenden Bahn in unerwünschter Weise verkleben.
Viel gravierender ist es, wenn der Spleiß reißt, weil insbesondere der Träger im Klebeband nicht ausreichend stabil ist, um die aufgrund der hohen Zugkräfte auftretenden Querkräfte (Kräfte in Querrichtung des Klebebandträgers) aufnehmen zu können. Insbesondere der Träger im Klebeband muss so dimensioniert sein, dass diese Kräfte möglichst ohne Dehnung des Trägers absorbiert werden können.
Auch das Ende eines Wickels aus Stahlblech entwickelt die starke Tendenz, vom Wickel abzustehen, so dass das Verschlussklebeband sehr starke Querkräfte aufnehmen können muss, um nicht zu reißen.

Aufgabe der Erfindung ist es, ein Klebeband zu verwenden das alle erforderlichen mechanischen Eigenschaften aufweist, um insbesondere als Spleißklebeband oder zum End Tabbing Verwendung finden zu können, indem das Klebeband und hierbei insbesondere der Träger auf das Klebeband einwirkende Querkräfte absorbiert werden können, und das gleichzeitig den steigenden Anforderungen an eine umweltschonende Produktion genügt.

Gelöst wird diese Aufgabe durch die Verwendung eines Klebebands, wie es im Hauptanspruch näher gekennzeichnet ist. In den Unteransprüchen sind vorteilhafte Ausführungsformen der Erfindung beschrieben.

Demgemäß betrifft die Erfindung die Verwendung eines Klebebandes mit einem Träger aus einer Folie, auf den einseitig eine Klebemasse auf Basis von Natur- oder Synthesekautschuk aufgebracht ist, wobei
- die Folie eine biaxial orientierte Folie aus Polypropylen, Polyethylen oder Polyester wie PET ist und
- auf der nicht mit Klebemasse beschichteten Seite des Trägers eine Releaseschicht vorhanden ist, insbesondere auf Basis von Carbamat.

Für das Klebeband werden aufgrund der besonderen mechanischen Ansprüche orientierte Folienträger eingesetzt. Durch Orientierung gleichbedeutend mit einer Verstreckung der primär im Herstellprozess gebildeten Primärfolie in eine oder mehrere Vorzugsrichtungen lassen sich die mechanischen Eigenschaften gezielt beeinflussen. So genannte biaxial orientierte Folien können entweder sequentiell verstreckt werden, wobei die Primärfolie nach Bildung durch Extrusion mit einer Breitschlitzdüse zunächst in Maschinenrichtung verstreckt wird, indem sie über eine Abfolge von Walzen geführt wird, wobei die Transportgeschwindigkeit der Folie größer ist als die Geschwindigkeit beim Austritt aus der Extrusionsdüse. Anschließend wird die Folie in einem Streckwerk in Querrichtung verstreckt. Das Verstrecken der Folie in zwei Richtungen kann auch in einem Schritt ausgeführt werden (vergleiche zum Beispiel US 4,675,582 A und US 5,072,493 A).
Ebenfalls ist bekannt, BOPP-Träger im Blasfolienverfahren zu verstrecken.

Das Wirkprinzip der Orientierung liegt in der Ausrichtung der Polymermolekülketten und der daraus gebildeten Kristallstrukturen sowie in der Ausrichtung der amorphen Bereiche in bestimmte Vorzugsrichtungen und der damit verbundenen Festigkeitszunahme. Prinzipbedingt wird dabei aber auch die Festigkeit in diejenige Richtung, in welche nicht orientiert wird, verringert.

Gemäß einer bevorzugten Ausführungsform besteht die Folie aus biaxial orientiertem Polypropylen oder biaxial orientiertem Polyester wie Polyethylenterephthalat. Das Reckverhältnis bei der Reckung der Folie (insbesondere bei Folien aus PE und PP) in Längsrichtung (Maschinenrichtung) beträgt vorzugsweise 1:5 bis 1:9, besonders bevorzugt 1:6 bis 1:7,5 ganz besonders bevorzugt 1:6 bis 1:6,5.
Das Reckverhältnis bei der Reckung der Folie (ebenfalls insbesondere bei Folien aus PE und PP) in Querrichtung beträgt vorzugsweise 1:5 bis 1:10, besonders bevorzugt 1:6 bis 1:7.
Weiter vorzugsweise ist bei PE- und PP-Folien die Reckung in Längsrichtung und Querrichtung gleich.
Das Reckverhältnis bei der Reckung der Folie (insbesondere bei Folien aus PET) in Längsrichtung (Maschinenrichtung) beträgt vorzugsweise 1:3,5 bis 1:6, besonders bevorzugt 1:4 bis 1:5.

Das Reckverhältnis bei der Reckung der Folie (ebenfalls insbesondere bei Folien aus PET) in Querrichtung beträgt vorzugsweise 1:3,5 bis 1:6, besonders bevorzugt 1:4 bis 1:5.
Weiter vorzugsweise ist bei PET-Folien die Reckung in Längsrichtung und Querrichtung gleich.
Ein Reckverhältnis 1:6 gibt an, dass aus einem Abschnitt der Folie von zum Beispiel 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Die im Folgenden verwendeten Zahlenangaben beziehen sich auf die Reckung.
Weiterhin kann die Folie aus Blends aus Polyethylen und Propylen bestehen.
Gemäß einer weiteren vorteilhaften Ausführungsform der Erfindung enthält die Folie zumindest teilweise Copolymere des Propylens (bei Polyethylen als Hauptmonomer) beziehungsweise Copolymere des Polyethylens (bei Polypropylen als Hauptmonomer).

Gemäß der vorteilhaftesten Ausführungsform besteht die Folie aus reinem Polyester.
Als Folienmaterial werden reines Polypropylen oder Polyethylen bevorzugt, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).
Der (bevorzugt gewichtsmäßige) Anteil des Copolymers ist stets kleiner als der (bevorzugt gewichtsmäßige) Anteil des Hauptmonomers.
Als Trägermaterial für das Klebeband eignen sich auch, aber eher ungenügend weiterhin Folien wie zum Beispiel aus PA, PU oder PVC. Alle diese Polymere sind aber erfindungsgemäß nicht bevorzugt.

Denkbar sind Folienlaminate, in denen zumindest eine Folie gewählt wird aus der Gruppe
- biaxial orientiertes Polypropylen
- biaxial orientiertes Polyethylen oder
- biaxial orientierter Polyester wie PET.

Erfordert der Einsatz des Klebebandes eine noch höhere Festigkeit oder Dehnungsresistenz, als sie durch einen alleinigen Folienträger erzielt werden kann, kann der Träger durch Anfügen von faserartigen Materialien, insbesondere einzelnen in Maschinenrichtung verlaufenden Filamenten oder Filamentgeweben oder -gelegen weiter verstärkt werden. Dem Fachmann bekannte Verfahren sind das Auflegen von erwähnten faserartigen Materialien auf eine vorbeschichtete Folienbahn und die in einem separaten oder auch im gleichen Produktionsschritt ausgeführte Nachbeschichtung mit der später eigentlich wirksamen Klebmasse.
Die faserartigen Verstärkungsmaterialen wie zum Beispiel Filamente oder Filamentgewebe oder -gelege können also direkt auf dem Träger (sei dieser aus Folie oder sei er ein textiler Träger) angebracht, in dem Träger eingebracht oder in die Klebemasse eingebracht sein.

Vorteilhaft besitzen die Folien eine Reißdehnung in Querrichtung zwischen 20 % und 160 %, in einer besonders vorteilhaften Ausführungsform zwischen 30 % und 120 %, weiter vorzugsweise zwischen 60 % und 100 %. Die Reißdehnung in Querrichtung wird entsprechend auch in Querrichtung der Folie bestimmt.
Weiter vorteilhaft besitzen die Folien eine Dicke zwischen 15 µm und 150 µm, in einer besonders vorteilhaften Ausführungsform zwischen 30 µm und 100 µm, weiter vorzugsweise 35 µm und 75 µm.
Weiter vorzugsweise weisen die Folien gleichzeitig eine Reißdehnung sowie eine Dicke auf, die innerhalb der angegebenen Grenzen liegen.
Die angegebenen Werte für die Reißdehnung und die Dicke gelten dabei insbesondere für biaxial verstreckte Folien.

Anzumerken ist an dieser Stelle, dass im Fall der durch Anfügen von Fasern beziehungsweise Filamenten vorzugsweise in Maschinenrichtung beziehungsweise Filamentgeweben oder -gelegen (beispielsweise Crossfilamente) verstärkten Klebebänder die Reißdehnung der Produkte in der Regel durch die Mechanik der Fasermaterialien und jener der Filamentgeometrien bestimmt wird. Typischerweise weisen derartige Produkte Reißdehnungen in Längsrichtung von 3 % bis 25 % auf, wobei 5 % bis 8 % besonders bevorzugt werden.

Als Träger können weiterhin alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Diese sind erfindungsgemäß nicht bevorzugt.

Vorzugsweise besteht der Träger aus exakt einer Folienlage (neben den noch zu beschreibenden Hilfsschichten wie Primerung oder Release).
Der Träger kann aber neben einer Folienschicht eine oder zwei oder weitere Folienlagen aufweisen. Bevorzugt sind Ausführungsformen mit bis zu fünf Folienlagen, die vorzugsweise alle aus demselben Polymer gebildet sind, besonders vorzugsweise Polyester.
Jede dieser Folien kann auch aus anderen Polymeren bestehen oder aus Blends zweier oder mehrerer Polymere.

Gemäß einer weiteren vorteilhaften Ausführungsform ist die Folie opak.
Des Weiteren kann der Träger gefärbt sein.

Vorzugsweise ist der Träger durch die Verwendung von Farbstoffen und/oder Pigmenten eingefärbt. Wenn im Folgenden nur von Farbstoffen beziehungsweise Pigmenten die Rede ist, so ist für den Fachmann offensichtlich, dass beides gemeint ist.

Geeignete Farbpigmente sind insbesondere solche, die fein verteilt vorliegen, beispielsweise Allzweck-, Fluoreszenzfarb- und nachleuchtende Pigmente.

Beispiele sind Ruß, Titandioxid, Calciumcarbonat, Zinkcarbonat, Zinkoxid, Silicate oder Kieselsäure, auch Glimmer, vor allem Kupferhydroxidphosphat oder auch Iriodin, ein Perlglanzpigment auf der Basis von basischem Bleicarbonat. Des Weiteren kann das Additiv ein thermochromer Farbstoff sein.

Das Pigment kann auf Anthrachinon basieren. Als Anthrachinon-Farbstoffe werden eine umfangreiche Gruppe von sehr lichtechten Farbstoffen verschiedenartiger Konstitution bezeichnet, die sich von Anthrachinon durch Substitution oder durch Ankondensierung weiterer Ringsysteme (zum Beispiel Acridone, Carbazole, Thiazole, Thiophen-Derivate, Azine, kondensierte Ringsysteme und dergleichen) ableiten.
Dazu gehören Aminoanthrachinon-Pigmente und Hydroxyanthrachinon-Pigmente sowie heterocyclische und polycarbocyclische Anthrachinon-Pigmente.

Weiter kann das Pigment aus einer Azo-Verbindung bestehen. Alle Azofarbstoffe haben die allgemeine Formel R1-N=N-R2, wobei die beiden Reste R1 und R2 identisch oder verschieden sein können.

Diese Farbstoffe werden den die Träger, vorzugsweise die Trägerfolie bildenden Basispolymeren insbesondere in der Größenordnung von einigen Promille (ab 3 Promille) bis maximal 10 Gew.-%, bevorzugt in Mengen von 1 bis 10 Gew.-%, insbesondere von 2 bis 4 Gew.-% bezogen auf das Gesamtgewicht der Trägerschicht, zugemischt.

Als Träger für das Klebeband können die beschriebenen Folien direkt eingesetzt werden, wobei in der Regel eine Fluor-, eine Plasmabehandlung eine Corona- oder auch Flammvorbehandlung der später mit der Klebmasse zu beschichtenden Seite erfolgt, um die Klebmasse besser auf dem Träger zu verankern.

Eine weitere Verbesserung der Haftung gleichbedeutend mit der Verankerung der Klebmasse auf dem Träger und somit der Vermeidung der Übertragung von Klebstoff auf die Rückseite des Trägers während des Abwickelns der Rollen (oder als Alternativbehandlung) kann durch den Einsatz von Primern (auch Haftvermittler genannt) erfolgen. Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxyharze als Additive verbessern die Haftung und erhöhen zum Teil auch die Scherfestigkeit des Haftklebstoffes. Bevorzugt werden isocyanatvernetzte Primer.
Mit diesen kann zum einen die Oberflächenenergie zielführend eingestellt werden und zum anderen zum Beispiel bei Verwendung von Isocyanat haltigen Primern eine chemische Anbindung der Klebmassenkomponente an den Träger verfolgt werden.

Das übliche Flächenauftragsgewicht des Primers liegt dabei zwischen 0,01 und 10 g/m², vorzugsweise zwischen 0,01 und 3 g/m², weiter vorzugsweise zwischen 0,05 und 0,2 g/m².

Eine weitere Möglichkeit, die Verankerung zu verbessern, besteht in der Verwendung von Trägerfolien, die durch Coextrusion gezielt mit einer für die Anbindung zum Haftklebstoff günstigen Polymeroberfläche ausgestattet sind.
Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, wird auf Natur- oder Synthesekautschuk basierte Klebemassen zurückgegriffen.

Bevorzugt wird eine Klebemasse verwendet, die aus der Gruppe der Naturkautschuke oder aus einem beliebigen Blend aus Naturkautschuken und Synthesekautschuken besteht, wobei der Anteil des Synthesekautschuk in dem Blend gemäß einer bevorzugten Variante kleiner als der Anteil des Naturkautschuks ist.

(Natur-)Kautschukklebemassen zeigen eine gute Kombination aus Klebkraft, Tack und Kohäsion sowie ausgewogenes Klebverhalten auf nahezu allen relevanten Haftuntergründen und sind somit prädestiniert. Allgemeine Informationen zu Kautschukklebemassen sind unter anderem Standardwerken für Klebebänder wie beispielsweise dem "Handbook of Pressure Sensitive Adhesive Technology" von Donatas Satas zu entnehmen.

Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden.

Vorzugsweise besteht das Polymer der Klebemasse aus Naturkautschuk, weiter vorzugsweise ist sogar neben Naturkautschuk kein weiteres Polymer in der Haftklebemasse vorhanden.
In diesem Fall ist die Haftklebemasse eine Zusammensetzung aus Naturkautschuk, einem oder mehreren Klebharz(en) und gegebenenfalls Alterungsschutzmittel(n).

Des Weiteren können auch andere Elastomere der Klebemasse zugesetzt sein. Vorzugsweise beträgt der Anteil des Naturkautschuks beziehungsweise des Blends aus Naturkautschuken und Synthesekautschuken an den Elastomeren 100 Gew.-%, vorzugsweise mindestens 80 Gew.-%, weiter vorzugsweise mindestens 50 Gew.-%. Weiter bevorzugt ist auch bei den geschilderten Elastomermischungen der Anteil des Synthesekautschuks kleiner als der des Naturkautschuks.
Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Eine Vernetzung kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Verwendbar sind alternativ Klebemassen auf Lösemittelbasis, auf wässriger Basis oder auch als Hotmeltsystem.

Zur Optimierung der Eigenschaften kann die zum Einsatz kommende Selbstklebemasse mit Klebrigmachern (Harzen) und/oder einem oder mehreren Zuschlagstoffen wie Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Klebrigmacher sind beispielsweise insbesondere hydrierte und nicht hydrierte Kohlenwasserstoffharze (zum Beispiel aus ungesättigten C₅- oder C₇-Monomeren), Terpenphenolharze, Terpenharze aus Rohstoffen wie α- oder β-Pinen und/oder δ-Limone, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.
Auf die Darstellung des Wissensstandes im "Handbook of Pressure Sensitive Adhesive Technology" von Donatas Satas (van Nostrand, 1989) sei ausdrücklich hingewiesen.

Geeignete Füllstoffe und Pigmente sind beispielsweise Fasern, Ruß, Zinkoxid, Titandioxid, Mikrovollkugeln, Voll- oder Hohlglaskugeln, Kieselsäure, Silikate, Kreide Ruß, Titandioxid, Calciumcarbonat und/oder Zinkcarbonat.

Geeignete Alterungsschutzmittel (Antiozonantien, Antioxidantien, Lichtschutzmittel usw.) für die Klebemassen sind primäre Antioxidantien wie zum Beispiel sterisch gehinderte Phenole, sekundäre Antioxidantien wie zum Beispiel Phosphite oder Thiosynergisten (Thioether) und/oder Lichtschutzmittel wie zum Beispiel UV-Absorber oder sterisch gehinderte Amine.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die aufgezählten Stoffe sind wiederum nicht zwingend, die Klebemasse funktioniert auch, ohne dass diese einzeln oder in beliebiger Kombination zugesetzt sind, also ohne Harze und/oder restliche Zuschlagstoffe.

Die Beschichtungsstärke mit Klebemasse liegt vorzugsweise im Bereich von 5 bis 250 g/m², insbesondere 15 bis 100 g/m², weiter vorzugsweise im Bereich von 15 bis 60 g/m².

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung oder Dispersion.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv (antiadhäsiv) wirkende Stoffe ausgerüstet sein. Bevorzugt wird ein Carbamat basierendes System.
Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄- bis C₂₈-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew.-%, besonders bevorzugt 13 bis 18 Gew.-% des trennwirksamen Bestandteils.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Der allgemeine Ausdruck "Klebeband" umfasst im Sinne dieser Erfindung alle flächigen Gebilde wie in zwei Dimensionen ausgedehnte Abschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.
Die Klebebänder weisen insbesondere Lauflängen von 1000 bis 30.000 m auf. Als Breite der Rollen werden üblicherweise 10, 15, 19, 25 und 30 cm gewählt.

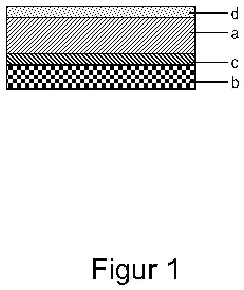

In der Figur 1 ist ein typischer Aufbau des erfindungsgemäßen Klebebands gezeigt.
Das Produkt besteht aus einer Folie (a) und einer Klebmasse (b). Zusätzlich können auch ein Primer (c) zur Verbesserung der Haftung zwischen Klebmasse und Träger sowie ein Rückseitenrelease (d) eingesetzt werden.
Der Träger (a) besteht aus einer Polyesterfolie mit einer Dicke von 50 µm.
Die Klebmasse (b) enthält eine Mischung aus Naturkautschuk sowie aus verschiedenen Harzen und kann gegebenenfalls auch Weichmacher, Füllstoffe und Alterungsschutzmittel enthalten.

Besonders bevorzugte Ausführungsformen zeigen ein Klebeband mit einem Folienträger mit einer Dicke zwischen 30 und 55 µm, vorzugsweise 36 und 50 µm aus Polyester wie Polyethylenterephthalat, auf den eine Naturkautschukklebemasse (das heißt Anteil des Naturkautschuks an den die Klebemasse bildendenden Elastomere mindestens 50 %) aufgebracht ist.
Weiter vorzugsweise ist auf der offenen, der Klebemasse gegenüberliegenden Trägerseite ein Carbamatrelease aufgebracht.

Die Erfindung beschreibt die Verwendung eines Klebebandes, welches zum Bilden eines Spleißes zwischen zwei Bahnen, insbesondere zwischen zwei Folienbahnen eingesetzt wird. Darüber hinaus ist es auch als Klebeband zum Verschließen von Wickeln aus Papier oder Metallbahnen geeignet.
Das Spleißen erfolgt vorzugsweise, indem das Klebeband hälftig derart über das Ende der obersten Lage der einen Rolle verklebt, dass im Wesentlichen noch die Hälfte der (Selbst)klebemasse, in der Breite des Klebebands gesehen, zur Verklebung mit dem anderen Bahnende zur Verfügung steht. Auch zur Bildung eines gestoßenen Spleißes wird das Klebeband gemäß einer bevorzugten Variante so verklebt, dass das Klebeband zu möglichst gleichen Teilen auf den beiden Bahnenden aufliegt.
Das Klebeband ist hervorragend in der Lage, die auf das Klebeband einwirkenden Quer-/Scherkräfte aufzunehmen und diesen entgegenzuwirken, ohne dass sich der Träger dehnt.

Im Folgenden soll das Klebeband anhand mehrerer Figuren näher erläutert werden, ohne damit eine wie auch immer geartete Einschränkung hervorrufen zu wollen.

Es zeigen
- Figur 3: das Klebeband bei der Bildung eines gestoßenen Spleißes und
- Figur 4: das Klebeband bei der Bildung eines überlappenden Spleißes.

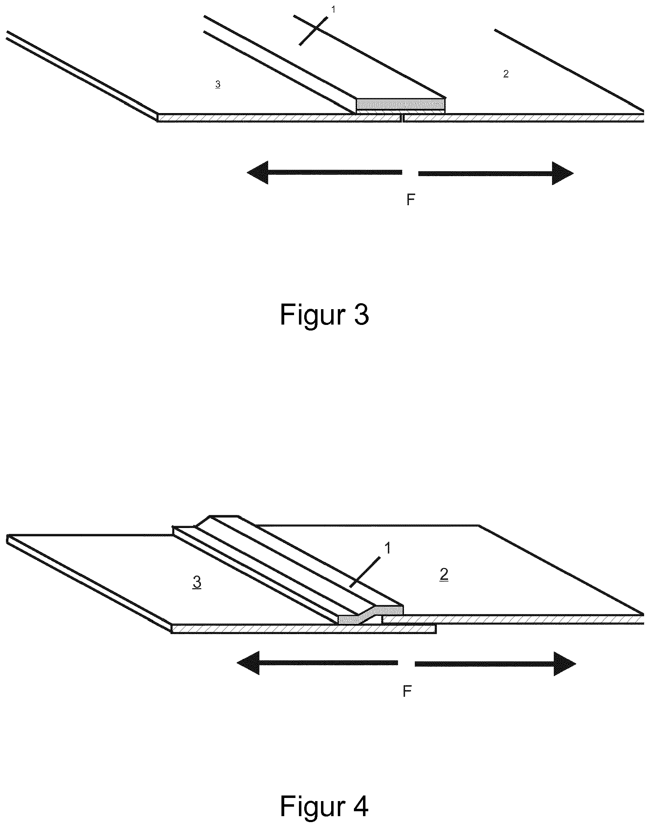

In der Figur 3 ist das Klebeband 1 bei der Bildung eines gestoßenen Spleißes zur Erzeugung einer endlosen Folienbahn gezeigt. Hierzu werden zwei Folienbahnenden 2, 3, die direkt aneinanderstoßen, mittels des Klebebands 1 derart verbunden, dass das Klebeband beide Kanten der Folienbahnenden 2, 3 überlappt. Die Folienbahnenden 2, 3 setzen sich links nach links beziehungsweise rechts "endlos" fort, bis der nächste Spleiß erforderlich ist, um die dortigen Folienbahnenden mit der nächsten Folienbahn miteinander zu verbinden.
Beim Auf- und Abwickeln der Folienbahn wirken auf das Klebeband 1 die gezeigten Zugkräfte F in Querrichtung ein, die auf den Spleiß einwirken. Das Klebeband 1, und hierbei insbesondere der Träger, müssen so dimensioniert sein, dass diese Zugkräfte aufgenommen und übertragen werden können, ohne dass das Klebeband 1 adhäsiv versagt und ohne dass es zu einem Reißen des Trägers kommt.

In der Figur 4 ist das Klebeband 1 bei der Bildung eines überlappenden Spleißes gezeigt. Die Folienbahnenden 2, 3 überlappen so, dass das Klebeband 1 parallel zur Endkante der oben liegenden Bahn 2 so aufgebracht wird, dass das Klebeband 1 sowohl auf dem Endstück der oben liegenden Bahn 2 verklebt wird als auch gleichzeitig auf einem Abschnitt auf der darunter liegenden Bahn 3. Die Überlappkante befindet sich unter dem Klebeband 1.
Auch bei dieser Spleißbildung muss das Klebeband 1 derart gestaltet sein, dass es die auftretenden Zugkräfte F, die in Querrichtung des Klebebands wirken, aufnehmen kann, ohne das es zu einem Versagen kommt.

In der Figur 1 ist im Schnitt in Querrichtung (Querschnitt) das Klebeband gezeigt, das aus einem Folienträger 10 besteht, auf den einseitig eine Schicht einer selbstklebenden Beschichtung 12 aufgebracht ist.

Im Folgenden wird die Erfindung durch ein Beispiel näher erläutert, ohne die Erfindung damit einschränken zu wollen.

### Beispiel 1, in der Tabelle Muster H

• 50 µm PET-Folie, zum Beispiel Hostaphan RNK 50
• 50 g/m² Klebmasse (NR-basierter Haftklebstoff)
• Carbamatrelease

| | **Klebemasse NR A** | **Klebemasse NR B** |
|---|---|---|
| Rohstoff | Gewichtsanteile | Gewichtsanteile |
| Kautschuk Natur V145 | 47 | 52 |
| Dertophene T 110 | 12 | 12 |
| Dercolyte S 115 | 21 | 22 |
| Erkazit 165 | 10 | 10 |
| ZnO-Puder | 5 | 5 |

Dercolyte S 115 ist ein Terpenharz auf β-Pinen-Basis.

Dertophene T 110 ist ein Terpenphenolharz.

Erkazit 165 ist ein Zinkresinat.

Das Klebeband weist die folgenden Eigenschaften auf:
Das Klebeband haftet gut auf Folien aller Art wie zum Beispiel PE, PP, PET (hohe Verklebungsfestigkeit).
Der Klebstoff des Klebebands ist scherfest genug, um einen Spleiß zweiter Folienlappen, die überlappend angeordnet sind, wobei das Klebeband derart auf der Überlappung verklebt ist, dass die Maschinenrichtung des Klebebands parallel zur Überlappung verläuft, über Zeiträume von mehr als 3 Tage, vorzugsweise mehr als 7 Tage zu fixieren. Dann wird der Test abgebrochen, ohne dass ein Versagen festzustellen ist.
Das Klebeband hält dem unter Transportbedingungen auftretenden Temperaturbereich von - 20 °C bis + 50 °C stand (Wärmebeständigkeit).
Das Klebeband hat eine sehr hohe Zugfestigkeit, so dass es den auftretenden Kräften bei der Bildung eines Spleißes stand kann.
Das Klebeband dehnt sich nicht zu sehr.

Es wurden insgesamt acht Muster von Klebebändern hergestellt, alle mit einem Polyesterträger, auf den unterschiedliche Haftklebstoffe in unterschiedlichen Stärken aufgebracht worden sind. Diese Muster A bis G entsprechen im Aufbau ansonsten dem aus Beispiel 1 bekannten Muster H.

| **Muster** | **Haftklebstoff** | **Masseauftrag [g/sqm]** | **Träger / Dicke [µm]** | **Zeit bis zum Versagen [h** |
|---|---|---|---|---|
| A | SIS | 100 | PET 36 µm | 6 |
| B | SIS | 100 | PET 50 µm | 5 |
| B | Acrylic | 50 | PET 50 µm | 11 |
| C | Acrylic | 50 | PET 36 µm | 15 |
| D | Acrylic | 30 | PET 36 µm | 10 |
| E | NRA | 30 | PET 36 µm | > 72 |
| F | NRB | 30 | PET 36 µm | > 72 |
| G | NRB | 30 | PET 50 µm | > 72 |
| H | NRB | 50 | PET 50 µm | > 72 |

Die "Zeit bis zum Versagen" ist nach der Methode zur Messung der Scherfestigkeit in Querrichtung bestimmt worden.

Die Klebebänder A bis D zeigen ein befriedigendes Verhalten. Die Scherfestigkeit ist ausreichend, um zumindest mehrere Stunden dem Zug bei der Bildung eines Spleißes standzuhalten.
Extrem hervorragend funktionieren die Muster E bis H (letzteres ist das im Beispiel 1 gezeigte Muster).

### Prüfmethoden

Die Messungen werden (sofern nichts anderes angegeben ist) bei einem Prüfklima von 23 ± 1 °C und 50 ± 5 % rel. Luftfeuchte durchgeführt.

### Klebkraft

Die Bestimmung der Klebkraft (gemäß AFERA 5001) wurde wie folgt durchgeführt. Als definierter Haftgrund wurde galvanisch verzinktes Stahlblech mit einer Stärke von 2 mm (Bezug von der Firma Rocholl GmbH) eingesetzt. Das zu untersuchende verklebbare Flächenelement wurde auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wurde das verklebbare Flächenelement in einem Winkel von 180° vom Haftgrund mit einem Zugprüfungsgerät (Firma Zwick) abgezogen und die hierfür bei Raumtemperatur benötigte Kraft gemessen. Der Messwert (in N/cm) ergab sich als Mittelwert aus drei Einzelmessungen.

### Dicke

Die Dicke wird nach DIN 53370 gemessen.

### Zugdehnungsverhalten

Das Zugdehnungsverhalten wird, wenn nicht anders angegeben, in Maschinenrichtung (MD, Laufrichtung) geprüft. Die Zugfestigkeit wird in MP und die Bruchdehnung in % ausgedrückt; beide Werte werden nach der DIN 53455-7-5 gemessen. Die Prüfergebnisse, insbesondere die Bruchdehnung (Reißdehnung), sind durch eine hinreichende Zahl von Messungen statistisch abzusichern.
Die 1 %- oder 10 %-Dehnung werden nach DIN 53455-7-5 in Längsrichtung bestimmt.

### Messung der Scherfestigkeit in Querrichtung

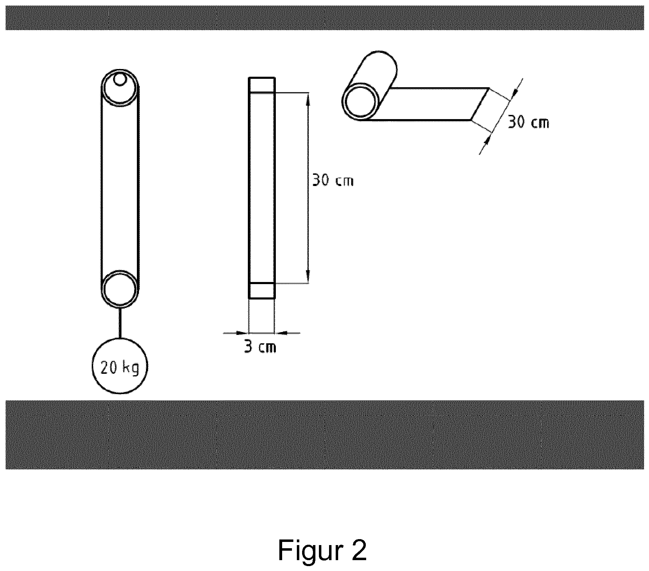

Ein 3 cm breiter Streifen aus der entsprechenden Folie wird um zwei Zylinder gewickelt und wie in Figur 2 abgebildet mit einem Klebeband verbunden, so dass eine Schlaufe entsteht. Die Enden der Folie sind dabei auf Stoß angeordnet, so dass die Verklebungsfläche auf jeder Seite vom Stoß 3 cm x 15 cm beträgt. Daraufhin wird das Konstrukt auf einer Stahlstange aufgehängt und über den unteren Zylinder mit einem Gewicht von 20 kg belastet. Es wird dabei die Zeit bis zum Öffnen der Schlaufe, also dem vollständigen Versagen des Klebebandes gemessen.

Mit diesem Test werden die Scherkräfte simuliert, die in der erfindungsgemäßen Verwendung auf das Klebeband einwirken, beispielweise bei der Bildung eines Folienspleißes.

## Patentansprüche

1. Verwendung eines Klebebandes zum Verbinden zweier Bahnen (Spleißen), insbesondere zum Verbinden zweier Folienbahnen, mit einem Träger aus einer Folie, auf den einseitig eine Klebemasse auf Basis von Natur- oder Synthesekautschuk aufgebracht ist, wobei
die Folie eine biaxial orientierte Folie aus Polypropylen, Polyethylen oder Polyester wie PET ist und auf der nicht mit Klebemasse beschichteten Seite des Trägers eine Releaseschicht vorhanden ist, insbesondere auf Basis von Carbamat.

2. Verwendung nach Anspruch 1,
**dadurch gekennzeichnet, dass**
das Reckverhältnis bei der Reckung der Folie (insbesondere bei Folien aus PE und PP) in Längsrichtung 1:5 bis 1:9 beträgt, bevorzugt 1:6 bis 1:7,5, besonders bevorzugt 1:6 bis 1:6,5 und/oder
das Reckverhältnis bei der Reckung der Folie (insbesondere bei Folien aus PE und PP) in Querrichtung 1:5 bis 1:10, besonders bevorzugt 1:6 bis 1:7.

3. Verwendung nach Anspruch 1,
**dadurch gekennzeichnet, dass**
das Reckverhältnis bei der Reckung der Folie (insbesondere bei Folien aus PET) in Längsrichtung (Maschinenrichtung) 1:3,5 bis 1:6, bevorzugt 1:4 bis 1:5 beträgt und/oder das Reckverhältnis bei der Reckung der Folie (ebenfalls insbesondere bei Folien aus PET) in Querrichtung 3,5 bis 1:6, bevorzugt 1:4 bis 1:5 und/oder
das Reckverhältnis bei der Reckung der Folie (insbesondere bei Folien aus PET) in Längsrichtung und Querrichtung gleich ist.

4. Verwendung nach zumindest einem der Ansprüche 1 bis 3,
**dadurch gekennzeichnet, dass**
das Klebeband faserartige Verstärkungsmaterialen wie zum Beispiel Filamente oder Filamentgewebe oder -gelege aufweist, die direkt auf der Folie angebracht, in die Folie eingebracht oder in die Klebemasse eingebracht sind.

5. Verwendung nach zumindest einem der vorherigem Ansprüche,
**dadurch gekennzeichnet, dass**
das Klebeband einen Folienträger mit einer Dicke zwischen 30 und 55 µm, vorzugsweise 36 und 50 µm aufweist.

6. Verwendung nach zumindest einem der vorherigem Ansprüche,
**dadurch gekennzeichnet, dass**
zwischen Träger und Klebemassenschicht ein Haftvermittler aufgebracht ist.

7. Verwendung nach zumindest einem der vorherigem Ansprüche,
**dadurch gekennzeichnet, dass**
die Klebemasse aus der Gruppe der Naturkautschuke oder der Blends aus Naturkautschuken und Synthesekautschuken gewählt ist.

8. Verwendung nach zumindest einem der vorherigen Ansprüche,
**dadurch gekennzeichnet, dass**
die Klebemasse Klebharze enthält, vorzugsweise solche auf Basis von hydrierten, teilhydrierten oder nicht hydrierten Kohlenwasserstoffharzen, Terpenphenolen und Kolophoniumestern.

9. Verwendung nach zumindest einem der vorherigen Ansprüche,
**dadurch gekennzeichnet, dass**
die Klebemasse zumindest ein UV-Schutzmittel und/oder weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

## Claims

1. Use of an adhesive tape for joining two webs (splicing), more particularly for joining two film webs, with a carrier composed of a film, there being applied on one side of the carrier an adhesive based on natural rubber or synthetic rubber, where
the film is a biaxially oriented film made of polypropylene, polyethylene or polyester such as PET, and on the side of the carrier not coated with adhesive there is a release layer, based in particular on carbamate.

2. Use according to Claim 1,
**characterized in that**
the draw ratio on drawing of the film (especially in the case of films made of PE and PP) in longitudinal direction is 1:5 to 1:9, preferably 1:6 to 1:7.5, more preferably 1:6 to 1:6.5 and/or
the draw ratio on drawing of the film (especially in the case of films made of PE and PP) in transverse direction is 1:5 to 1:10, more preferably 1:6 to 1:7.

3. Use according to Claim 1,
**characterized in that**
the draw ratio on drawing of the film (especially in the case of films made of PET) in longitudinal direction (machine direction) is 1:3.5 to 1:6, preferably 1:4 to 1:5 and/or
the draw ratio on drawing of the film (likewise especially in the case of films made of PET) in the transverse direction is 3.5 to 1:6, preferably 1:4 to 1:5 and/or
the draw ratio on drawing of the film (especially in the case of films made of PET) is the same in longitudinal and transverse directions.

4. Use according to at least one of Claims 1 to 3,
**characterized in that**
the adhesive tape has fibre-like reinforcing materials such as, for example, filaments or woven filament fabric or laid filament scrim, which are mounted directly on the film, incorporated into the film or incorporated into the adhesive.

5. Use according to at least one of the preceding claims,
**characterized in that**
the adhesive tape has a film carrier having a thickness of between 30 and 55 µm, preferably 36 and 50 µm.

6. Use according to at least one of the preceding claims,
**characterized in that**
an adhesion promoter is applied between carrier and layer of adhesive.

7. Use according to at least one of the preceding claims,
**characterized in that**
the adhesive is selected from the group of the natural rubbers or of the blends of natural rubbers and synthetic rubbers.

8. Use according to at least one of the preceding claims,
**characterized in that**
the adhesive comprises tackifier resins, preferably those based on hydrogenated, partly hydrogenated or unhydrogenated hydrocarbon resins, terpene-phenols and rosin esters.

9. Use according to at least one of the preceding claims,
**characterized in that**
the adhesive comprises at least one UV protectant and/or other blending components, more particularly plasticizers, ageing inhibitors, processing assistants, fillers, dyes, optical brighteners, stabilizers, end-block reinforcer resins.

## Revendications

1. Utilisation d'une bande adhésive pour la liaison de deux bandes (épissage), notamment pour la liaison de deux bandes en forme de film, comprenant un support en un film, sur lequel un matériau adhésif à base de caoutchouc naturel ou de synthèse est appliqué d'un côté,
le film étant un film orienté biaxialement en polypropylène, polyéthylène ou polyester tel que le PET, et une couche anti-adhérente, notamment à base de carbamate, étant présente sur le côté du support non revêtu avec le matériau adhésif.

2. Utilisation selon la revendication 1, **caractérisée en ce que** le rapport d'étirage lors de l'étirage du film (notamment en cas de films en PE et PP) dans la direction longitudinale est de 1:5 à 1:9, de préférence de 1:6 à 1:7,5, de manière particulièrement préférée de 1:6 à 1:6,5 et/ou
le rapport d'étirage lors de l'étirage du film (notamment en cas de films en PE et PP) dans la direction transversale est de 1:5 à 1:10, de manière particulièrement préférée de 1:6 à 1:7.

3. Utilisation selon la revendication 1, **caractérisée en ce que** le rapport d'étirage lors de l'étirage du film (notamment en cas de films en PET) dans la direction longitudinale (sens machine) est de 1:3,5 à 1:6, de préférence de 1:4 à 1:5, et/ou
le rapport d'étirage lors de l'étirage du film (également notamment en cas de films en PET) dans la direction transversale est de 3,5 à 1:6, de préférence de 1:4 à 1:5, et/ou
le rapport d'étirage lors de l'étirage du film (notamment en cas de films en PET) dans la direction longitudinale et dans la direction transversale est identique.

4. Utilisation selon au moins l'une quelconque des revendications 1 à 3, **caractérisée en ce que** la bande adhésive comprend des matériaux de renforcement fibreux tels que par exemple des filaments ou un tissu ou une nappe de filaments, qui sont appliqués directement sur le film, introduits dans le film ou introduits dans le matériau adhésif.

5. Utilisation selon au moins l'une quelconque des revendications précédentes, **caractérisée en ce que** la bande adhésif comprend un support en film d'une épaisseur comprise entre 30 et 55 µm, de préférence entre 36 et 50 µm.

6. Utilisation selon au moins l'une quelconque des revendications précédentes, **caractérisée en ce qu'**un promoteur d'adhésion est appliqué entre le support et la couche de matériau adhésif.

7. Utilisation selon au moins l'une quelconque des revendications précédentes, **caractérisée en ce que** le matériau adhésif est choisi dans le groupe constitué par les caoutchoucs naturels ou les mélanges de caoutchoucs naturels et de caoutchoucs de synthèse.

8. Utilisation selon au moins l'une quelconque des revendications précédentes, **caractérisée en ce que** le matériau adhésif contient des résines adhésives, de préférence à base de résines hydrocarbonées hydrogénées, partiellement hydrogénées ou non hydrogénées, de terpène-phénols et d'esters de colophane.

9. Utilisation selon au moins l'une quelconque des revendications précédentes, **caractérisée en ce que** le matériau adhésif contient au moins un agent protecteur anti-UV et/ou d'autres composants de mélange, notamment des plastifiants, des agents antivieillissement, des adjuvants d'usinage, des charges, des colorants, des azurants optiques, des stabilisateurs, des résines renforçantes à séquences terminales.
